# EUROPEAN PATENT SPECIFICATION

(11) **EP 2 116 520 B1**
(45) Date of publication and mention of the grant of the patent: **15.08.2012**
(21) Application number: 08703377.5
(22) Date of filing: 17.01.2008
(51) Int. Cl.: C04B 37/00, C04B 38/00, C04B 35/565, B28B 11/24, C04B 28/24, B28B 1/00, C04B 35/80, F01N 3/28, F26B 21/00

(54) **METHOD OF PRODUCING HONEYCOMB SEGMENT BONDED BODY**
VERFAHREN ZUR HERSTELLUNG EINES WABENSEGMENT-VERBUNDKÖRPERS
PROCÉDÉ DE FABRICATION D'UN CORPS SOUS FORME DE SEGMENTS DE NIDS D'ABEILLE LIÉS ENTRE EUX

(30) Priority: 18.01.2007 JP 2007009558
(43) Date of publication of application: 11.11.2009
(73) Proprietor: NGK Insulators, Ltd., Nagoya-shi, Aichi 467-8530 (JP)
(72) Inventor: INOUE, Katsuhiro, Nagoya-shi Aichi 467-8530 (JP); TOMITA, Takahiro, Nagoya-shi Aichi 467-8530 (JP); KAWAI, Masaaki, Nagoya-shi Aichi 467-8530 (JP)
(74) Representative: Paget, Hugh Charles Edward
(86) International application number: PCT/JP2008/050522
(87) International publication number: WO 2008/088013

(56) References cited:
- EP-A1- 1 625 923
- EP-A1- 1 739 288
- EP-A1- 1 834 936
- EP-A1- 1 835 249
- EP-A1- 1 847 518
- WO-A1-2005/047210
- WO-A1-2007/096986
- JP-A- 2001 130 970
- JP-A- 2003 334 810
- JP-A- 2004 291 270
- JP-A- 2006 297 900

## Description

### Technical Field

The present invention relates to a method of producing a honeycomb segment bonded body in which a plurality of honeycomb segments is integrally bonded by a plurality of bonding material layers.

### Background Art

For the improvement of the environment, the prevention of environmental pollution and the like, a honeycomb structure is often used as a collecting filter for an exhaust gas. At present, for example, a diesel particulate filter (DPF) made of SiC is prepared by integrally bonding together 16 base materials (honeycomb segments) bonded so as to prevent cracking due to thermal shock, by a bonding material (a ceramic cement material). See for example EP-A-1739288. However, there have been problems that a difference of a dried bonding material texture is made, depending on bonded portions, and that fluctuations of characteristics of the bonding material texture are also generated, whereby portions having low characteristics are cracked during a thermal resistance test.

In general, the filter base materials are bonded and then dried to solidify by a hot air drier. In JP-A-2004-291270 corresponding to EP-A-1625923, a bonding method of a segmented ceramic honeycomb structure is disclosed in which the bonding material near the end faces of a layered article is dried for a purpose of preventing the kink or crack of the bonding material near the end faces, and then the whole layered article is dried.

In a general drying method or a prior application, the movement of the bonding material texture or the honeycomb segments during the drying is not noted, and hence when 12 or more honeycomb segments are bonded by the ceramic bonding material, the fluctuations of the characteristics of the bonding material layers are generated, depending on the bonded portions. The honeycomb segments non-uniformly move accompanying the contraction or hardening of the bonding material, depending on the bonded portions during the drying, whereby the textures of the dried bonding material layers become non-uniform, depending on the bonded portions, and the fluctuations of the characteristics of the bonding material layers are generated, depending on the bonded portions. During the preparation of the bonded body, it is ideal that the drying of the bonding material occurs similarly in the respective bonded portions, but the proceeding of the drying varies inside and outside the bonded article, and the behaviors of the drying contraction and hardening of the bonding material accompanying the drying vary. For example, at this time, the movement of the honeycomb segments accompanying the drying contraction and hardening of the bonding material is not homogeneous, and hence the fluctuations are generated not only in the proceeding of the formation of the bonding layers but also in the characteristics of the layers. For example, in a certain portion, as the bonding material contracts, the honeycomb segments harden while moving in a direction in which a bonding interval decreases. In another portion, the one side of the honeycomb segment has already hardened, and hence the honeycomb segment cannot move so as to match the contraction of the bonding material, but hardens. Alternatively, the honeycomb segments conversely move in a direction in which the bonding interval increases, thereby generating the fluctuations not only in the textures of the bonding material layers but also in the characteristics thereof.

An object of the present invention is to provide a method of producing a honeycomb segment bonded body which prevents fluctuations from being generated in a bonding texture among a plurality of honeycomb segments integrally bonded together by bonding material layers formed of a bonding material, to prevent fluctuations from being generated in strength characteristics.

### Disclosure of the Invention

The present inventors have found that when honeycomb segments are bonded together and the end faces of the honeycomb segments are heated and dried, the above problems can be solved. That is, according to the present invention, the method of producing a honeycomb segment bonded body set ant in claim 1 is provided.

In step (ii) of the method of producing the honeycomb segment the end faces of the honeycomb segments are preferably heated until 1% or more of the water content by mass of the whole honeycomb segment bonded body has flow.

Preferably the bonding material contains plate-like particles.

The honeycomb segments are integrally bonded together at the plurality of mutual bonding faces by use of the bonding material, and the end faces of the integrated honeycomb segment bonded body are heated and dried before the hardening of the bonding material ends. Afterward, the whole body is heated, whereby the movement of the honeycomb segments accompanying the drying contraction and hardening of the bonding material can be homogenized, non-uniformity in the proceeding of the formation of the bonding material layers can be decreased, and the non-uniformity of the characteristics of the honeycomb segments can be decreased. That is, since the end faces of the honeycomb segment bonded body are first immobilized, the movement of the honeycomb segments during the drying of the whole bonded body can be suppressed, and the fluctuations of the proceeding of the formation of the bonding material layers can be decreased, thereby decreasing the fluctuations of the characteristics depending on bonded portions to improve a resistance to thermal shock.

### Brief Description of the Drawings

Fig. 1 is a flow chart showing manufacturing steps of a honeycomb segment bonded body to which a producing method of the present invention is applied.
Fig. 2 is a perspective view showing a honeycomb segment;
Fig. 3 is an explanatory view showing a bonding method of the honeycomb segments;
Fig. 4 is a diagram showing the end face of the honeycomb segment bonded body;
Fig. 5 is an explanatory view showing the drying of the end face in the producing method of the present invention; and
Fig. 6 is an explanatory view for explaining a bending test of a bonded portion.

### Description of Reference Numerals

1: honeycomb segment bonded body, 2: partition wall, 3: cell, 5: bonding material layer, 7: outer peripheral wall, 8: end face, 10: honeycomb segment, 11: test piece, 15: drier, 16: trowel, 20: vertically receiving plate, and 21: laterally receiving plate.

### Best Mode for Carrying out the Invention

Hereinafter, an embodiment of the present invention will be described with reference to the drawings. The present invention is not limited to the following embodiment.

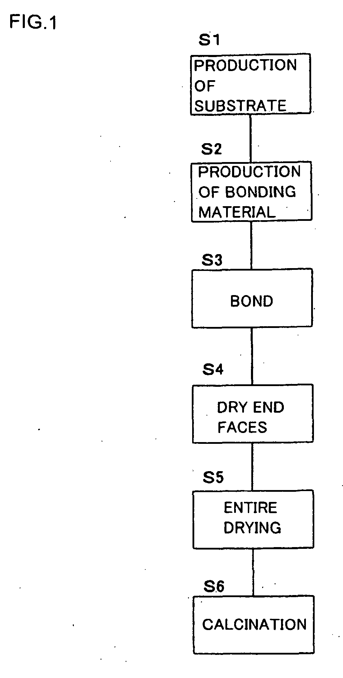

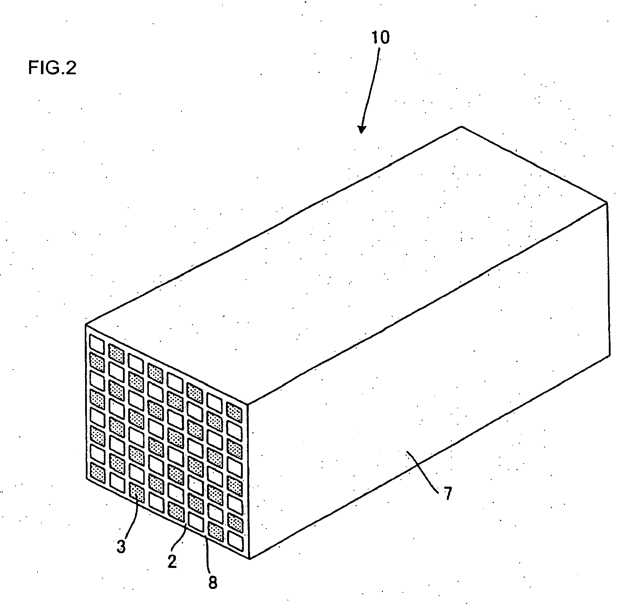

Fig. 1 shows producing steps of a honeycomb segment bonded body 1 to which a producing method of the present invention is applied. First, a base material (honeycomb segments 10) is prepared (S1). Next, a bonding material is prepared (S2). Then, the base materials are bonded together by using the bonding material (S3), and then the end faces of the materials are dried (S4). Next, the whole honeycomb segment bonded body 1 is dried (S5), and then calcinated (S6). During the whole drying, hot air drying, microwave drying or the like may be used. Each manufacturing step will be described with reference to Figs. 2 to 5.

Fig. 2 shows a honeycomb segment 10 to which the method of producing the honeycomb segment bonded body 1 of the present invention is applied and which is the base material prepared in S1 of Fig. 1. The honeycomb segment 10 is made of a ceramic material, and has an outer peripheral wall 7, partition walls 2 formed inside the outer peripheral wall 7, and a plurality of cells 3 partitioned by the partition walls 2.

Furthermore, when the honeycomb segment bonded body 1 of the present invention is used as a filter, as shown in Fig. 2, a part of the cells 3 is preferably plugged in end faces 8 of the honeycomb segment 10. In particular, the adjacent cells 3 are alternately plugged in the end faces 8 on opposite sides, and the end faces 8 are preferably plugged so as to form a checkered pattern. Since the end faces are plugged in this manner, for example, a fluid to be treated flowing into one of the end faces 8 passes through the partition walls 2, and is discharged from the other end face 8, and the porous partition walls 2 function as a filter when the fluid to be treated passes through the partition walls 2, whereby a target can be removed.

In the present invention, from viewpoints of strength, thermal resistance and the like, the honeycomb segment 10 is preferably made of at least one selected from the group consisting of cordierite, mullite, alumina, aluminum titanate, lithium aluminum silicate, silicon carbide, silicon nitride and a silicon carbide-metal silicon composite phase. When the honeycomb segment bonded body 1 of the present invention is used in a DPF, silicon carbide or a silicon-silicon carbide based composite phase is preferably used because the material has a high thermal resistance. Moreover, cordierite is preferably used because the material has a small coefficient of thermal expansion and a satisfactory resistance to thermal shock. Furthermore, in the present invention, when the honeycomb segment bonded body 1 is made of metal silicon (Si) and silicon carbide (SiC) and an Si content defined by Si/(Si+SiC) in the honeycomb segment bonded body 1 is excessively small, an effect produced by the addition of Si cannot be obtained, and hence the body has a low strength. When the content exceeds 50 mass%, effects produced by thermal resistance and high thermal conductivity as the characteristics of SiC cannot be obtained. The content of Si is preferably 5 to 50 mass%, further preferably 10 to 40 mass%.

A binder such as methyl cellulose or hydroxypropoxyl methyl cellulose, an organic pore former, a surfactant, water and the like are added to the above material to prepare a kneaded clay having plasticity, and the kneaded clay is, for example, extruded, to form a square-pole-like formed honeycomb article having a large number of cells 3 partitioned by the partition walls 2 and extending through the article in an axial direction. This article is dried by, for example, microwaves, hot air and the like, calcinated so as to remove the binder and the organic pore former, and then fired, whereby the honeycomb segment 10 can be manufactured.

Moreover, plugging portions for plugging the cells 3 in the end faces 8 preferably include, as a main crystal phase, at least one crystal phase selected from suitable examples of the main crystal phase of the above partition walls 2, and further preferably include, as the main crystal phase, a crystal phase of a type similar to that of the main crystal phase of the honeycomb segment bonded body 1.

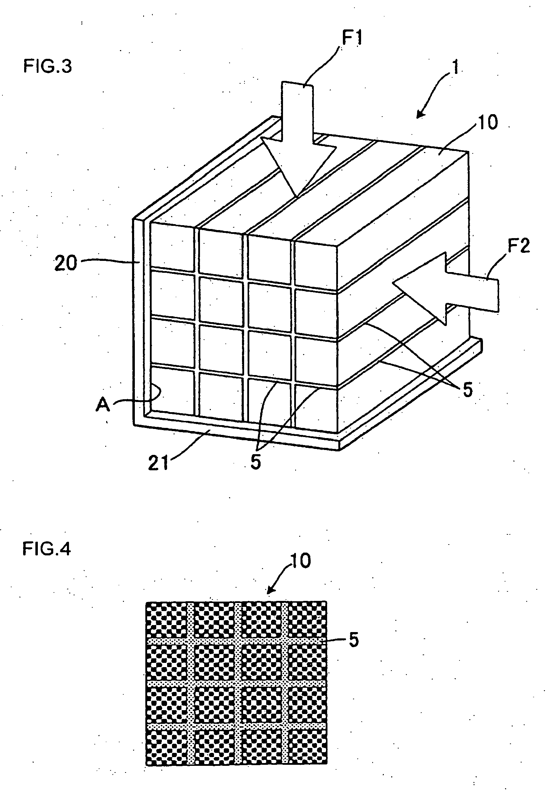

Fig. 3 shows a bonding method of the honeycomb segment bonded body 1 as one embodiment of the present invention. This honeycomb segment bonded body 1 has a constitution in which a plurality of ceramic porous honeycomb segments 10 each having a large number of cells 3 partitioned by the partition walls 2 and extending through the segment in an axial direction are bonded via bonding material layers 5 (Fig. 1: S3).

Specifically, as shown in Fig. 3, the honeycomb segments 10 are stacked in a receiving area A formed by a vertical receiving plate 20 and a lateral receiving plate 21 and having an L-shaped section, while outer peripheral walls 7 of the honeycomb segments are bonding faces and each bonding material layer 5 is interposed between the bonding faces. Thus, the honeycomb segment is stacked so as to dispose two faces of the segment along the vertical receiving plate 20 and the lateral receiving plate 21.

The bonding material of the bonding material layers 5 prepared in S2 of Fig. 1 includes inorganic particles and an inorganic adhesive as main components, and an organic binder, a surfactant, a resin balloon, water and the like as sub-components. As the inorganic particles, plate-like particles, spherical particles, lump-like particles, fibrous particles, needle-like particles or the like may be used, and as the inorganic adhesive, colloidal silica (silica sol), colloidal alumina (alumina sol), various types of oxide sol, ethyl silicate, water glass, silica polymer, aluminum phosphate or the like may be used. The bonding material preferably includes, as the main component, ceramic particles common to the constituent component of the honeycomb segment 10, preferably does not include fibrous particles such as ceramic fiber particles from a viewpoint of a health issue or the like, and preferably includes the plate-like particles. As the plate-like particles, for example, mica, talc, boron nitride, glass flakes or the like may be used. When this bonding material is attached to the bonding face of the honeycomb segment 10, the bonding material layer 5 can be formed. This bonding material layer 5 may be applied to the honeycomb segment 10 before stacked, or the exposed bonding face of the honeycomb segment 10 already stacked. Moreover, during the stacking, the honeycomb segments 10 are stacked one by one.

Next, as shown in Fig. 3, the predetermined number of the honeycomb segments 10 (16 segments in the present embodiment) are stacked, and then the whole segments are simultaneously finally pressurized in the directions of arrows F1 and F2 via the honeycomb segment 10 positioned as the outermost layer. During this pressurizing, the two faces of the stacked body are covered with the vertical receiving plate 20 and the lateral receiving plate 21, and hence the other two faces of the body are entirely and simultaneously pressurized finally in the directions of the arrows F1 and F2. At this time, an air cylinder, a hydraulic cylinder or the like is used as a pressurizing power.

As described above, as shown in Fig. 4, a plurality of honeycomb segments 10 are bonded together via the bonding material layers 5, to form the honeycomb segment bonded body 1.

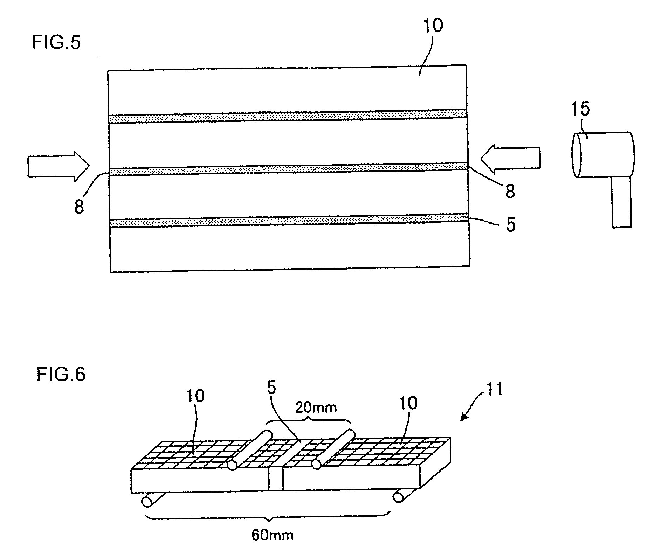

Next, the end faces 8 of the honeycomb segments 10 integrally bonded together by the bonding material are heated (Fig. 1: S4). That is, the end faces 8 of the integrated honeycomb segment bonded body 1 are heated and dried before the hardening of the bonding material ends. Specifically, as shown in Fig. 5, both the end faces 8 of the honeycomb segment bonded body 1 are heated. In particular, when the end faces 8 are simultaneously heated, both the end faces 8 are substantially simultaneously immobilized with similar movement, and hence the fluctuations of the texture of the bonding material layer can effectively be suppressed. Then, the end faces 8 of the honeycomb segments 10 may be heated until 1% or more of water content of the whole honeycomb segment bonded body 1 flies. The end faces 8 are dried with hot air at 140°C or more by a drier 15 or the like. Furthermore, the end faces 8 are dried for 60 seconds or more. contact with a heated heating member such as a trowel 16.

During the drying of the end faces, the honeycomb segments are preferably more immediately immobilized, and the temperature of the hot air is more effectively high. When the end faces are dried with the hot air at a comparatively low temperature, that is, a temperature lower than the hot air temperature of 140°C, for example, 80°C to 120°C, the end faces are insufficiently dried, and it is not possible to obtain an immobilization effect for suppressing the movement of the honeycomb segments during the drying, the effect being an object of the present application. If the end faces are dried with the low-temperature hot air for a long time in order to obtain the immobilization effect, even the drying contraction of the whole bonded body is simultaneously caused, and the movement of the honeycomb segments cannot be suppressed, so that the fluctuations of the bonding layers cannot be decreased. The hot air has a temperature of 140°C or more, and the temperature is preferably as high as possible, and more preferably 180°C or more. Furthermore, the end faces of the honeycomb segments are dried after removing the excessive bonding material so that the honeycomb segments are more immediately immobilized in a case where the bonding material protrudes during the bonding. In this case, the honeycomb segments are left to stand at room temperature until a water absorbing step from the bonding material to the honeycomb segments stabilizes, and then the end faces of the honeycomb segments are dried, whereby the fluctuations of the bonding layers are further effectively decreased. Moreover, a distance between a hot air blowing port and each end face 8 of the bonded body is more preferably as short as possible, as long as the hot air can be applied to the end face stably and uniformly during an operation. Furthermore, the distance is determined so that the hot air is concentrated on the end faces of the bonded body as much as possible. That is, the hot air is more preferably contrived so that the hot air does not hit the side surface of the bonded body or so that the hot air vertically hits the end faces of the bonded body.

After performing the drying of both the end faces 8 of the body as described above, the whole honeycomb segment bonded body 1 is heated to dry (Fig. 1: S5) and then calcinated (Fig. 1: S6). That is, both the end faces 8 are heated in advance to homogenize the movement of the honeycomb segments 10 accompanying the drying contraction and hardening of the base material, whereby the fluctuations (non-uniformity) of the proceeding of the formation of the bonding material layers 5 are decreased, and the fluctuations of the characteristics of the bonding material layers 5 among the honeycomb segments 10 can be decreased. In particular, in a case where the bonding material which does not include an inorganic fiber such as ceramic fiber is used, the characteristics of the bonding material layers 5 easily become non-uniform. However, when the end faces 8 of the honeycomb segment bonded body 1 are dried and then the whole body is dried, the characteristics of the bonding material layers 5 can be made uniform during the bonding. In consequence, the thermal shock resistance of the honeycomb segment bonded body 1 can be improved. Furthermore, the outer periphery of the body is ground into a cylindrical shape, and the outer peripheral surface of the body is coated with a coating material, followed by a thermal treatment at about 700°C for about two hours, whereby a honeycomb structure can be obtained.

### Examples

Hereinafter, the present invention will be described in more detail in accordance with examples, but the present invention is not limited to these examples.

### (Preparation of Honeycomb Segment)

As a material of each honeycomb segment, SiC powder and metal Si powder were mixed at a mass ratio of 80:20, and a pore former, an organic binder, a surfactant and water were added to this mixture, to prepare a kneaded clay having plasticity. This clay was extruded and dried to obtain a formed ceramic article having a partition wall thickness of 310 µm, a cell density of about 46.5 cells/cm² (300 cells/square inch), a square sectional shape with one side of 35 mm, and a length of 178 mm. Both end faces of cells of this formed ceramic article were plugged so that the end faces had a checkered pattern. That is, the end portions of the adjacent cells were alternately plugged on opposite sides. As a plugging material, a material similar to that of the honeycomb segment was used. Both the end faces of the cells were plugged and dried, and the article was degreased at about 400°C in the atmosphere, and then fired at about 1450°C in Ar inert atmosphere, thereby obtaining the honeycomb segment having a porous structure in which SiC crystal particles were combined with one another by Si.

### (Preparation of Bonding Material)

A bonding material 1 was obtained by mixing 41 mass% of SiC fine particles, 16.5 mass% of SiC coarse particles, 22 mass% of mica, 20 mass% of colloidal silica, 0.5 mass% of bentonite, 1.5 mass% of organic pore former (additional compounding based on 100 mass % of total main components of SiC fine particles, SiC coarse particles, mica, colloidal silica and bentonite), 0.4 mass% of organic binder (additional compounding based on 100 mass % of total main components of SiC fine particle, SiC coarse particles, mica, colloidal silica and bentonite) and 0.04 mass% of dispersant (additional compounding based on 100 mass % of total main components of SiC fine particle, SiC coarse particles, mica, colloidal silica and bentonite), further mixing this mixture with water, and kneading the resultant material by a mixer for 30 minutes, to obtain a paste-like bonding material. At this time, the amount of the water to be added was regulated so that a paste viscosity was 20 to 60 Pa•s. A bonding material 2 was obtained by mixing 43 mass% of SiC fine particles, 35 mass% of aluminosilicate fiber, 21 mass% of colloidal silica, 1 mass% of bentonite, 1.0 mass% of organic pore former (additional compounding based on 100 mass % of total main components of SiC fine particles, aluminosilicate fiber, colloidal silica and bentonite), 0.4 mass% of organic binder (additional compounding based on 100 mass % of total main components of SiC fine particles, aluminosilicate fiber, colloidal silica and bentonite) and 0.04 mass% of dispersant (additional compounding based on 100 mass % of total main components of SiC fine particles, aluminosilicate fiber, colloidal silica and bentonite), and regulating the resultant mixture in the same manner as in the bonding material 1.

### (Bonding)

Bonding faces of the honeycomb segment were coated with the bonding material 1, and the honeycomb segments were successively bonded while being pressurized one by one. This step was repeated to prepare three types of bonded bodies, that is, a body of 12 honeycomb segments as a combination of 3 vertical rows × 4 lateral rows (3 × 4 rows) of segments, a body of 16 honeycomb segments as a combination of 4 vertical rows × 4 lateral rows (4 × 4 rows) of segments and a body of 36 honeycomb segments as a combination of 6 vertical rows × 6 lateral rows (6 × 6 rows) of segments. Both end faces of each body were simultaneously heated at a hot air temperature of 250°C by a drier for 5 minutes, and the body was dried by a hot air drier at 140°C for 2 hours, and thermally treated by an electric furnace at 700°C for 0.5 hour, to obtain bonded bodies (Examples 1 to 3). Bonded bodies (Examples 4 to 6) were obtained by using the bonding material 2 by a similar method.

Bonded bodies (Comparative Examples 1 to 6) were obtained by a method similar to that of the above examples The bonding materials 1, 2 were used. The step of heating both end faces of each body simultaneously by a drier at a hot air temperature of 250°C for 5 minutes was omitted.

Bonded bodies (Examples 7 to 15, Comparative Examples 7 to 15) were obtained by using the bonding material 1 and changing conditions of a hot air temperature and a heating time during the simultaneous heating of both the end faces of each bonded body as shown in Table 1.

**[Table 1]**

| | Bonded body | Bonding material | Presence of end face drying | Hot air temperature °C | Time sec | Flied water % | Bending strength ratio Minimum value/Maximum value | Evaluation |
|---|---|---|---|---|---|---|---|---|
| Example 1 | 3 vertical rows × 4 lateral rows | 1 | Present | 250 | 300 | 2.1 | 0.90 | ⊚ |
| Example 2 | 4 vertical rows × 4 lateral rows | 1 | Present | 250 | 300 | 2 | 0.89 | ⊚ |
| Example 3 | 6 vertical rows × 6 lateral rows | 1 | Present | 250 | 300 | 1.9 | 0.88 | ⊚ |
| Example 4 | 3 vertical rows × 4 lateral rows | 2 | Present | 250 | 300 | 1.9 | 0.97 | ⊚ |
| Example 5 | 4 vertical rows × 4 lateral rows | 2 | Present | 250 | 300 | 1.8 | 0.95 | ⊚ |
| Example 6 | 6 vertical rows × 6 lateral rows | 2 | Present | 250 | 300 | 1.7 | 0.92 | ⊚ |
| Comparative Example 1 | 3 vertical rows × 4 lateral rows | 1 | None | - | - | 0.10 | 0.11 | Δ |
| Comparative Example 2 | 4 vertical rows × 4 lateral rows | 1 | None | - | - | 0.08 | 0.03 | × |
| Comparative Example 3 | 6 vertical rows × 6 lateral rows | 1 | None | - | - | 0.07 | 0.03 | × |
| Comparative Example 4 | 3 vertical rows × 4 lateral rows | 2 | None | - | - | 0.11 | 0.30 | Δ |
| Comparative Example 5 | 4 vertical rows × 4 lateral rows | 2 | None | - | - | 0.07 | 0.15 | Δ |
| Comparative Example 6 | 6 vertical rows × 6 lateral rows | 2 | None | - | - | 0.05 | 0.10 | Δ |
| Example 7 | 4 vertical rows × 4 lateral rows | 1 | Present | 200 | 300 | 1.7 | 0.83 | ⊚ |
| Example 8 | 4 vertical rows × 4 lateral rows | 1 | Present | 300 | 300 | 2.5 | 0.89 | ⊚ |
| Example 9 | 4 vertical rows × 4 lateral rows | 1 | Present | 250 | 180 | 1.5 | 0.85 | ⊚ |
| Example 10 | 4 vertical rows × 4 lateral rows | 1 | Present | 200 | 90 | 1.3 | 0.73 | ○ |
| Example 11 | 4 vertical rows × 4 lateral rows | 1 | Present | 180 | 60 | 1.0 | 0.78 | ○ |
| Example 12 | 4 vertical rows × 4 lateral rows | 1 | Present | 150 | 180 | 1.3 | 0.75 | ○ |
| Example 13 | 4 vertical rows × 4 lateral rows | 1 | Present | 140 | 300 | 1.1 | 0.68 | ○ |
| Example 14 | 3 vertical rows × 4 lateral rows | 1 | Present | 180 | 60 | 1.8 | 0.89 | ⊚ |
| Example 15 | 6 vertical rows × 6 lateral rows | 1 | Present | 180 | 90 | 1.1 | 0.72 | ○ |
| Comparative Example 7 | 4 vertical rows × 4 lateral rows | 1 | Present | 100 | 300 | 0.20 | 0.03 | × |
| Comparative Example 8 | 4 vertical rows × 4 lateral rows | 1 | Present | 120 | 120 | 0.25 | 0.06 | × |
| Comparative Example 9 | 4 vertical rows × 4 lateral rows | 1 | Present | 250 | 30 | 0.40 | 0.38 | Δ |
| Comparative Example 10 | 4 vertical rows × 4 lateral rows | 1 | Present | 300 | 10 | 0.35 | 0.15 | Δ |
| Comparative Example 11 | 4 vertical rows × 4 lateral rows | 1 | Present | 100 | 120 | 0.22 | 0.08 | × |
| Comparative Example 12 | 4 vertical rows × 4 lateral rows | 1 | Present | 100 | 60 | 0.15 | 0.05 | × |
| Comparative Example 13 | 4 vertical rows × 4 lateral rows | 1 | Present | 80 | 600 | 0.20 | 0.05 | × |
| Comparative Example 14 | 3 vertical rows × 4 lateral rows | 1 | Present | 180 | 30 | 0.65 | 0.45 | Δ |
| Comparative Example 15 | 6 vertical rows × 6 lateral rows | 1 | Present | 180 | 30 | 0.38 | 0.33 | Δ |

### (Amount of Flied Water)

The mass of the whole bonded body was measured before or after the end faces of the bonded body were dried, to measure the amount of flied water. As the flied amount, the decrease of the mass of the bonded body after the drying of the end faces thereof with respect to the amount of the water included in the bonded body before the drying was calculated and represented by a percentage.

### (Bonded Portion Bending Strength)

A test piece 11 having a width of 15 mm, a thickness of 10 mm and a length of 70 mm as shown in Fig. 6 was cut and prepared from each bonded portion substantially in the center of the bonded body in a length direction, and the four-point bending strength was measured with an outer span of 60 mm and an inner span of 20 mm. To check the fluctuations of the strength value of each bonded portion, the ratios (the minimum values/the maximum values) between the maximum values and the minimum values in a set of all the resultant strength values were calculated and compared. The ratios were evaluated in accordance with the values of the being strength ratios, that is, a ratio of 0.8 or more was evaluated as a double circle, a ratio of 0.5 to less than 0.8 was evaluated as a circle, a ratio of 0.1 to less than 0.5 was evaluated as a triangle, and a ratio of less than 0.1 was evaluated as a cross.

### (Bending Strength Characteristic Evaluation Result)

As seen from Table 1, the bonded bodies (Examples 1 to 6) subjected to the simultaneous drying of both the end faces thereof by the hot air had a ratio of the minimum strength with respect to the maximum strength, which was close to 1, and the fluctuations of the strength depending on the bonded portions were small. On the other hand, the bonded bodies (Comparative Examples 1 to 6) whose end faces were not dried had problems that the ratio of the minimum strength with respect to the maximum strength was small and that the fluctuations of the strength depending on the bonded portions were large.

As to the bonded bodies (Examples 7 to 15) in which the end face drying conditions were changed, the amount of the flied water was 1.0% or more, the ratio of the minimum strength with respect to the maximum strength was close to 1, and the fluctuations of the strength depending on the bonded portions were small. On the other hand, as to the bonded bodies (Comparative Examples 7 to 15) in which the hot air temperature during the drying was low or the drying time was short, the amount of the flied water was smaller than 0.4 %, the ratio of the minimum strength with respect to the maximum strength was smaller than 0.4, and the fluctuations of the strength depending on the bonded portions were large.

### (Evaluation of Thermal Resistance)

A bonded body including 16 honeycomb segments as a combination of 4 vertical rows of segments and 4 lateral rows of segments was prepared by using the bonding material 1 on conditions similar to those of the bonded bodies (Examples 2, 5 and 7, Comparative Examples 2, 5 and 9), and was dried by a hot air drier at 140°C. Afterward, the outer periphery of the body was ground into a cylindrical shape, and the outer peripheral surface of the body was coated with a coating material, followed by a thermal treatment at 700°C for 2 hours, whereby a honeycomb structure was obtained. The resultant honeycomb structure was subjected to an immediate heating test (a burner spalling test) at a test temperature of 900°C, and the presence/absence of crack in the tested honeycomb structure was observed. The structure which was not cracked was evaluated as a circle, the slightly cracked structure was evaluated as a triangle, and the cracked structure was evaluated as a cross.

**[Table 2]**

| | Bonded body | Bonding material | Presence of end face drying | Hot air temperature °C | Time sec | Flied water % | Bending strength ratio Center/Outer portion | Burner spalling 900°C |
|---|---|---|---|---|---|---|---|---|
| Example 2 | 4 vertical rows × 4 lateral rows | 1 | Present | 250 | 300 | 2 | 0.89 | ○ |
| Example 5 | 4 vertical rows × 4 lateral rows | 2 | Present | 250 | 300 | 1.8 | 0.95 | ○ |
| Comparative Example 2 | 4 vertical rows × 4 lateral rows | 1 | None | - | - | 0.1 | 0.03 | × |
| Comparative Example 5 | 4 vertical rows × 4 lateral rows | 2 | None | - | - | 0.1 | 0.15 | Δ |
| Example 7 | 4 vertical rows × 4 lateral rows | 1 | Present | 200 | 300 | 1.6 | 0.83 | ○ |
| Comparative Example 9 | 4 vertical rows × 4 lateral rows | 1 | Present | 250 | 60 | 0.4 | 0.38 | × |

### (Thermal Resistance Evaluation)

As seen from Table 2, the bonded bodies (Examples 2, 5 and 7) subjected to the end face drying were evaluated as a circle indicating a satisfactory result, whereas the bonded bodies which were not subjected to the end face drying were evaluated as a triangle (Comparative Example 5) and as a cross (Comparative Examples 2, 9) indicating a problem in the resistance to thermal shock.

During the preparation of the honeycomb segment bonded body, it is ideal that the drying of the bonding material occurs similarly in the respective bonded portions. However, in a case where the honeycomb segment bonded article is enlarged (a large number of honeycomb segments are bonded together), in the bonded body which has been bonded into a final shape and entirely dried instead of drying the end faces thereof as in the comparative example, the proceeding of the drying varies inside and outside the body, and the behaviors of the accompanying drying contraction and hardening of the bonded body vary. For example, at this time, the movement of the honeycomb segments accompanying the drying contraction and hardening of the bonded body is not homogeneous, and hence fluctuations are generated not only in the proceeding of the formation of the bonding material layers but also in the characteristics of the layers. In the present invention, to solve such a problem, both the end faces of the bonded body are heated in advance to homogenize the drying conditions of the respective bonded portions. For example, at this time, the movement of the honeycomb segments accompanying the drying contraction and hardening of the base material is homogenized, whereby the fluctuations of the proceeding of the formation of the bonding material layers are decreased, and the fluctuations of the characteristics of the bonding material layers are also decreased.

### Industrial Applicability

A method of producing a honeycomb segment bonded body of the present invention is useful as, for example, a method of producing a diesel particulate filter (DPF) for collecting and removing a particulate matter (particulates) included in an exhaust gas from a diesel engine or the like.

## Claims

1. A method of producing a honeycomb segment bonded body (1), comprising the steps of: (i) integrally bonding together honeycomb segments (10) each having a plurality of cells (3) which are partitioned by partition walls (2) and which extend through the segment (10) in an axial direction at a plurality of mutual bonding faces in 3 × 4 rows or more, by use of bonding material (7); (ii) heating and drying the end faces (8) of the integrated honeycomb segment bonded body to immobilize the honeycomb segments (10) at the end faces; and (iii) then heating and drying the whole body, wherein in step (ii) both end faces of the honeycomb segment bonded body are simultaneously dried by hot air at 140°C or more for 60 seconds or more.

2. The method of producing the honeycomb segment bonded body according to claim 1, wherein in step (ii) the end faces of the honeycomb segments are heated until 1% or more of the water content by mass of the whole honeycomb segment bonded body has flown.

3. The method of producing the honeycomb segment bonded body according to claim 1 or 2, wherein the bonding material contains plate-like particles.

## Patentansprüche

1. Verfahren zur Herstellung eines Wabensegmentverbundkörpers (1), das folgende Schritte umfasst: (i) das einstückige Verbinden von Wabensegmenten (10), die jeweils eine Vielzahl von Zellen (3) aufweisen, die durch Trennwände (2) getrennt sind und sich in axialer Richtung entlang einer Vielzahl von Verbindungsflächen in Reihen von 3 x 4 oder mehr durch das Segment (10) erstrecken, unter Verwendung eines Haftmaterials (7); (ii) das Erhitzen und Trocknen der Endflächen (8) des einstückigen Wabensegmentverbundkörpers, um die Wabensegmente (10) an den Endflächen zu fixieren, und (iii) das anschließende Erhitzen und Trocknen des gesamten Körpers, wobei in Schritt (ii) beide Endflächen des Wabensegmentverbundkörpers gleichzeitig durch Heißluft mit 140 °C oder mehr 60 s lang oder länger getrocknet werden.

2. Verfahren zur Herstellung eines Wabensegmentverbundkörpers nach Anspruch 1, worin in Schritt (ii) die Endflächen der Wabensegmente erhitzt werden, bis 1 Gew.-% oder mehr des Wassergehalts des gesamten Wabensegmentverbundkörpers abgeflossen ist.

3. Verfahren zur Herstellung eines Wabensegmentverbundkörpers nach Anspruch 1 oder 2, worin das Haftmaterial plattenähnliche Teilchen enthält.

## Revendications

1. Procédé de production d'un corps lié de segments de nid d'abeilles (1), comprenant les étapes consistant à : (i) lier, ensemble, d'un seul tenant, des segments de nid d'abeilles (10) comportant chacun une pluralité de cellules (3) qui sont divisées par des parois de division (2) et qui s'étendent à travers le segment (10) dans une direction axiale au niveau d'une pluralité de faces de liaison mutuelles en 3 x 4 rangées ou plus, en utilisant un matériau de liaison (7) ; (ii) chauffer et sécher les faces d'extrémité (8) du corps lié de segments de nid d'abeilles intégrés pour immobiliser les segments de nid d'abeilles (10) au niveau des faces d'extrémité ; et (iii) chauffer et sécher ensuite le corps entier, dans lequel, à l'étape (ii), les deux faces d'extrémité du corps lié de segments de nid d'abeilles sont séchées simultanément par de l'air chaud à 140 °C ou plus pendant 60 secondes ou plus.

2. Procédé de production du corps lié de segments de nid d'abeilles selon la revendication 1, dans lequel, à l'étape (ii), les faces d'extrémité des segments de nid d'abeilles sont chauffées jusqu'à ce que 1 % ou plus de la teneur en eau par masse du corps lié de segments de nid d'abeilles entier se soit évaporée.

3. Procédé de production du corps lié de segments de nid d'abeilles selon la revendication 1 ou 2, dans lequel le matériau de liaison contient des particules similaires à des plaques.
